# EUROPEAN PATENT APPLICATION

(11) **EP 2 136 327 A1**
(43) Date of publication of application: **23.12.2009**
(21) Application number: 09163121.8
(22) Date of filing: 18.06.2009
(51) Int. Cl.: G06Q 30/00

(54) **System for transaction at sea**

(30) Priority: 20.06.2008 TW 97123181
(71) Applicant: Su, Hsin-Chi, Songshan District Taipei City 105 (TW)
(72) Inventor: Su, Hsin-Chi, Songshan District Taipei City 105 (TW)
(74) Representative: Michalski Hüttermann & Partner Patentanwälte

(57) **Abstract**

In a system for transaction at sea, a plurality of offshore wireless network apparatuses is separately provided on different marine vessels to form a network at sea, so as to transmit supplies-to-buy information sent by a ship to at least one of a plurality of ground wireless network apparatuses via the offshore wireless network apparatuses; and a transaction control platform linked with the ground wireless network apparatuses receives and analyzes the supplied-to-buy information in order to procure the supplies needed by the ship. Therefore, transaction services at sea can be provided to a ship navigating the sea.

## Description

### FIELD OF THE INVENTION

The present invention relates to a system for transaction at sea, and more particularly to a system that utilizes a network at sea to provide a ship with transaction services when the ship is offshore.

### BACKGROUND OF THE INVENTION

The voyage time of an ocean-going ship is often very long, and it is very possible the ocean-going ship will not be in a next harbor within one or two months after departure. Therefore, the ocean-going ship has to store a large quantity of living necessaries, foods, various kinds of accessories and parts, fuel, electric appliances, lifesaving appliances, fire fighting devices, ship hardware, chemical engineering materials, ship navigation system, navigation-related books and materials, machinery, communication and broadcast instruments, containers, spare hatch covers, anchors, anchor chains and accessories, etc., so as to provide the crew with sufficient food, or to maintain or repair or replace parts and accessories on board, ensuring the ship can arrive the destination on time.

When the ship needs to replenish the stock of supplies or requires some incidental supplies, the captain has to report to a ship management department on ground via a satellite communication system about the supplies to be replenished. The ship management department will then place orders to related suppliers and informs them the scheduled arrival time and place of the ship and goods to be delivered. Finally, when the ship arrives, the suppliers deliver the ordered goods and supplies to the ship.

However, a ship that navigates among different countries does not always anchor at fixed harbors. Therefore, the replenishment of supplies is not necessarily done at the same harbors. The ship management department has to clearly know the ship route, the prices of the needed supplies and the next anchoring place of the ship, so as to place orders to the suppliers located at the next anchoring place to procure and deliver at least part of the needed supplies to the next anchoring place. In brief, the ship management department has to procure the needed supplies at the lowest possible prices while ensuring the best possible quality and the lowest possible stock.

In the above-described conventional procedures for transaction at sea, the captain and the ship management department communicate with each other via the satellite communication system and high communication cost is required to replenish the stock of supplies. Moreover, since the prices for the same supplies are different at different places or countries, the ship management department must have sufficient capability to control global information about different supplies to achieve the object of procuring the best quality supplies at the lowest prices. However, in the process of placing orders by the ship management department to the suppliers, the captain is not able to directly obtain information about the supplies that are to be supplied by the suppliers. Further, the ship management department does not necessarily understand what supplies are most urgent or most helpful to the crew's life at sea.

Therefore, it is desirable to develop a system for transaction at sea to overcome the problems in the conventional ways of replenishing the stock of supplies for an ocean-going ship, so that the ocean-going ship can effectively control information about supplies to be replenished and execute the best purchase policy.

### SUMMARY OF THE INVENTION

A primary object of the present invention is to provide a system for transaction at sea, so as to provide ships at sea with transaction services.

To achieve the above and other objects, the system for transaction at sea according to a first embodiment of the present invention includes a first offshore wireless network apparatus, a plurality of second offshore wireless network apparatuses, and a transaction control platform. The first offshore wireless network apparatus is provided on a first marine vessel and transmits information about supplies needed by the first marine vessel. That is, the first offshore wireless network apparatus transmits supplies-to-buy information for the first marine vessel. The plurality of second offshore wireless network apparatuses are separately provided on different second marine vessels and wirelessly linked with the first offshore wireless network apparatus for receiving the supplies-to-buy information. The second offshore wireless network apparatuses are also wirelessly linked with at least one of a plurality of ground wireless network apparatuses for transmitting the supplies-to-buy information to the ground wireless network apparatuses. The transaction control platform is linked with the ground wireless network apparatuses for receiving and analyzing the supplies-to-buy information, so as to procure the supplies needed by the first marine vessel.

The system for transaction at sea according to a second embodiment of the present invention includes a first offshore wireless network apparatus, a plurality of second offshore wireless network apparatuses, a plurality of third offshore wireless network apparatuses, and a transaction control platform. The first offshore wireless network apparatus is provided on a first marine vessel and transmits information about supplies needed by the first marine vessel. That is, the first offshore wireless network apparatus transmits supplies-to-buy information for the first marine vessel. The plurality of second offshore wireless network apparatuses are separately provided on different second marine vessels and wirelessly linked with the first offshore wireless network apparatus for transmitting the supplies-to-buy information. The plurality of third offshore wireless network apparatuses are separately provided on different third marine vessels and wirelessly linked with the second offshore wireless network apparatuses for receiving the supplies-to-buy information. The third offshore wireless network apparatuses are also wirelessly linked with at least one of a plurality of ground wireless network apparatuses for transmitting the supplies-to-buy information to the ground wireless network apparatuses. The transaction control platform is linked with the ground wireless network apparatuses for receiving and analyzing the supplies-to-buy information, so as to procure the supplies needed by the first marine vessel.

The system for transaction at sea according to a third embodiment of the present invention includes a plurality of ship information receiver units, a plurality of first offshore wireless network apparatuses, and a transaction control platform. The plurality of ship information receiver units are separately provided on different first marine vessels for receiving supplies-to-buy information transmitted from a ship. The plurality of first offshore wireless network apparatuses are also separately provided on the first marine vessels and wirelessly linked with at least one of a plurality of ground wireless network apparatuses for transmitting the supplies-to-buy information to the ground wireless network apparatuses. The transaction control platform is linked with the ground wireless network apparatuses for receiving and analyzing the supplies-to-buy information, so as to procure the supplies needed by the ship.

In the third embodiment of the present invention, the ship information receiver units each are preferably a ship automatic identification system.

In the third embodiment of the present invention, the supplies-to-buy information is included in wireless signals broadcast by a ship automatic identification system on the ship.

The system for transaction at sea according to a fourth embodiment of the present invention includes a plurality of ship information receiver units, a plurality of first offshore wireless network apparatuses, a plurality of second offshore wireless network apparatuses, and a transaction control platform. The plurality of ship information receiver units are separately provided on different first marine vessels for receiving supplies-to-buy information transmitted from a ship. The plurality of first offshore wireless network apparatuses are also separately provided on the first marine vessels for transmitting the supplies-to-buy information. The plurality of second offshore wireless network apparatuses are separately provided on different second marine vessels and wirelessly linked with the first offshore wireless network apparatuses for receiving the supplies-to-buy information. The second offshore wireless network apparatuses are also wirelessly linked with at least one of a plurality of ground wireless network apparatuses for transmitting the supplies-to-buy information to the ground wireless network apparatuses. The transaction control platform is linked with the ground wireless network apparatuses for receiving and analyzing the supplies-to-buy information, so as to procure the supplies needed by the ship.

In the fourth embodiment of the present invention, the ship information receiver units each are preferably a ship automatic identification system.

In the fourth embodiment of the present invention, the supplies-to-buy information is included in wireless signals broadcast by a ship automatic identification system on the ship.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a block diagram of a system for transaction at sea according to a first embodiment of the present invention;

Fig. 2 is a conceptual view of the system for transaction at sea according to the first embodiment of the present invention;

Fig. 3 is a block diagram of a system for transaction at sea according to a second embodiment of the present invention;

Fig. 4 is a conceptual view of the system for transaction at sea according to the second embodiment of the present invention;

Fig. 5 is a block diagram of a system for transaction at sea according to a third embodiment of the present invention;

Fig. 6 is a conceptual view of the system for transaction at sea according to the third embodiment of the present invention;

Fig. 7 is a block diagram of a system for transaction at sea according to a fourth embodiment of the present invention; and

Fig. 8 is a conceptual view of the system for transaction at sea according to the fourth embodiment of the present invention.

### DETAILED DESCRIPTION OF THE PREFERRED EMBODIMENTS

The present invention will now be described with some preferred embodiments thereof. For the purpose of easy to understand, elements that are the same in the preferred embodiments are denoted by the same reference numerals.

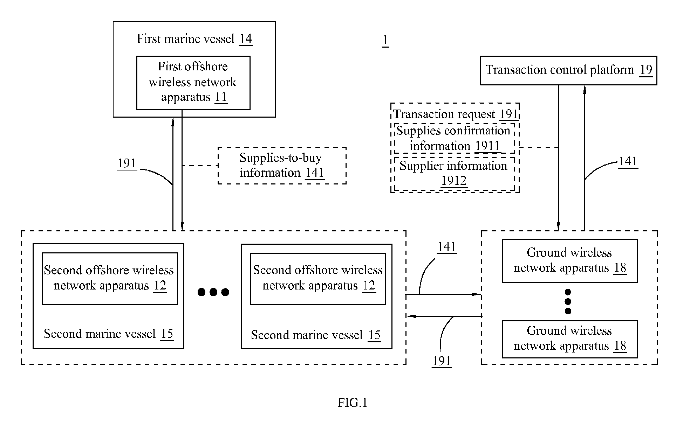

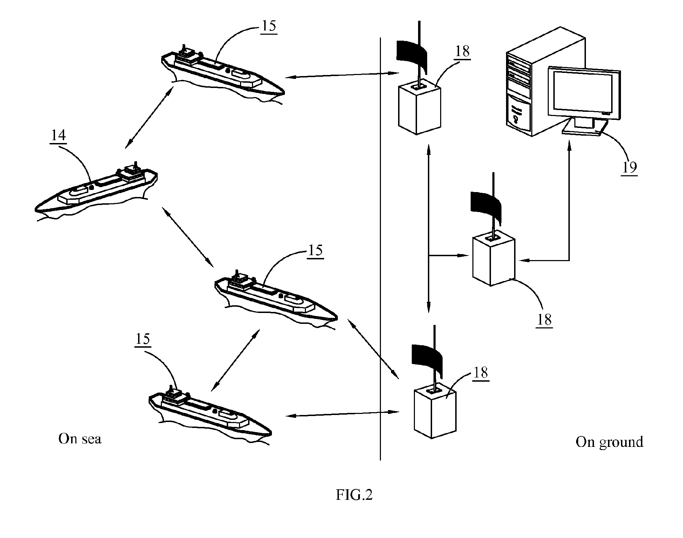

Please refer to Figs. 1 and 2 that are block diagram and conceptual view, respectively, of a system for transaction at sea according to a first embodiment of the present invention. For the purpose of conciseness and clarity, the system for transaction at sea according to the present invention is also briefly referred to as "the system" herein. As shown, the system according to the first embodiment is generally denoted by reference numeral 1, and includes a first offshore wireless network apparatus 11, a plurality of second offshore wireless network apparatuses 12, and a transaction control platform 19. The first offshore wireless network apparatus 11 is provided on a first marine vessel 14 and transmits information 141 about supplies needed by the first marine vessel 14 (hereinafter referred to as the "supplies-to-buy information 141"). The second offshore wireless network apparatuses 12 are separately provided on different second marine vessels 15 and are wirelessly linked with the first offshore wireless network apparatus 11 for receiving the supplies-to-buy information 141. The second offshore wireless network apparatuses 12 are also linked with at least one of a plurality of ground wireless network apparatuses 18 and transmit the supplies-to-but information 141 to the ground wireless network apparatuses 18. The transaction control platform 19 is linked with the ground wireless network apparatuses 18 for receiving and analyzing the supplies-to-buy information 141 in order to procure the supplies needed by the first marine vessel 14.

Further, the transaction control platform 19 generates a transaction request 191, which includes supply confirmation information 1911, such as quantities, prices and shipping schedule of the supplies needed by the first marine vessel 14, and supplier information 1912 showing suppliers available for supplying the needed supplies, so that the staff on the first marine vessel 14 can select desired items and suppliers. The transaction control platform 19 sends the transaction request 191 back to the first marine vessel 14 via the ground wireless network apparatuses 18, the second offshore wireless network apparatuses 12, and the first offshore wireless network apparatus 11.

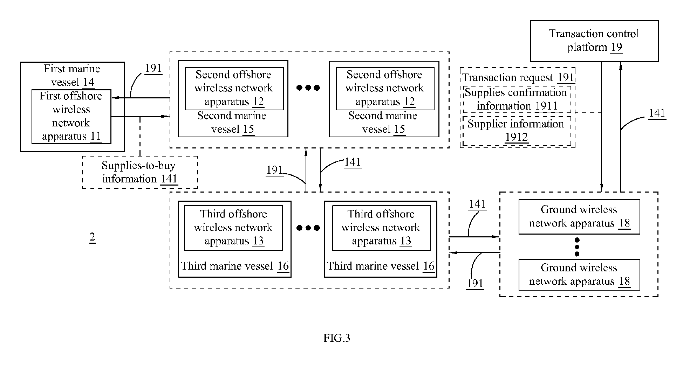

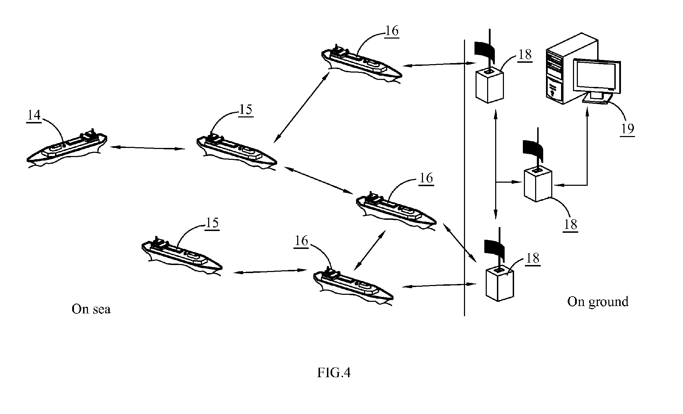

Please refer to Figs. 3 and 4 that are block diagram and conceptual view, respectively, of a system 2 for transaction at sea according to a second embodiment of the present invention. The second embodiment is generally structurally similar to the first embodiment except that the system 2 further includes a plurality of third offshore wireless network apparatuses 13, which are separately provided on different third marine vessels 16 and wireless linked with the second offshore wireless network apparatuses 12 for receiving the supplies-to-buy information 141. The third offshore wireless network apparatuses 13 are also wirelessly linked with at least one of a plurality of ground wireless network apparatuses 18 to transmit the supplies-to-buy information 141 to the ground wireless network apparatuses 18, while the second offshore wireless network apparatuses 12 are not directly linked with the ground wireless network apparatuses 18. The transaction control platform 19 is linked with the ground wireless network apparatuses 18 for receiving and analyzing the supplies-to-buy information 141 in order to procure the supplies needed by the first marine vessel 14. Further, depending on actual need, the first offshore wireless network apparatus 11 can include an operation interface, with which the staff on the first marine vessel 14 can input the supplies-to-buy information 141.

When the transaction control platform 19 has generated the transaction request 191, the transaction request 191 is transmitted to the first marine vessel 14 via the ground wireless network apparatuses 18, the third offshore wireless network apparatuses 13, the second offshore wireless network apparatuses 12, and the first offshore wireless network apparatus 11. Compared to the system 1, the system 2 for transaction at sea can provide transaction services to marine vessels that are farther away from the ground. That is, the system 2 provides an even wider service range. Therefore, even if the first marine vessel 14 is not in a harbor, it can still obtain the supply confirmation information 1911 and the supplier information 1912 to select supplies that can be procured at the lowest possible prices and in the best possible quality, and make a response to the transaction request 191 sent by the transaction control platform 19, allowing the transaction control platform 19 to proceed with necessary procuration or purchase.

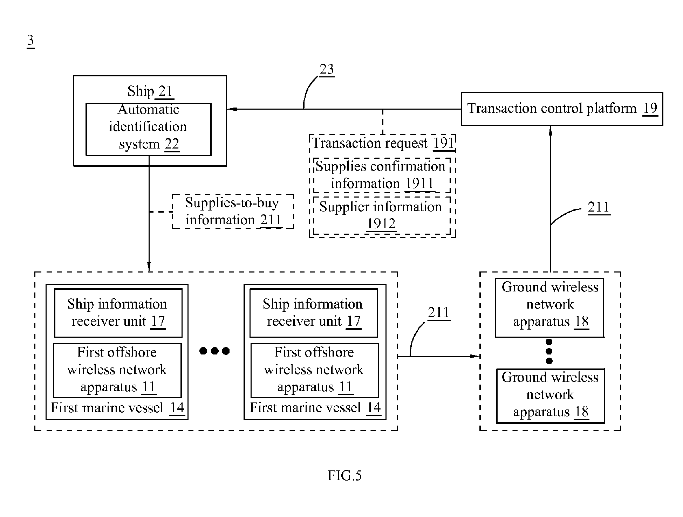

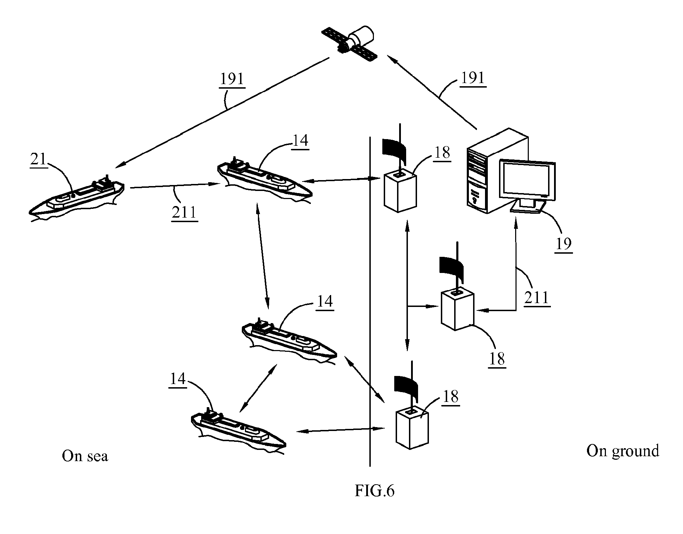

Figs. 5 and 6 are block diagram and conceptual view, respectively, of a system 3 for transaction at sea according to a third embodiment of the present invention. The system 3 is designed to provide transaction services to a ship 21 at sea, and includes a plurality of ship information receiver units 17, a plurality of first offshore wireless network apparatuses 11, and a transaction control platform 19. The ship information receiver units 17 are separately provided on different first marine vessels 14 for receiving messages broadcast by a ship automatic identification system 22 on the ship 21. The messages include information 211 about supplies needed by the ship 21 (hereinafter referred to as the supplies-to-buy information 211). The messages broadcasted by the ship automatic identification system 22 also include information related to the voyage of the ship 21, such as the nature of cargos on the ship, the destination, the estimated arrival time, the planned course, or the like. With the above information, it is able to estimate the fuel and foods having been consumed by the ship 21. In the present invention, the ship information receiver units 17 each are preferably, but not limited to, a ship automatic identification system.

The first offshore wireless network apparatuses 11 are separately located at different first marine vessels 14, and are wirelessly linked with at least one of a plurality of ground wireless network apparatuses 18 for transmitting the supplies-to-buy information 211 to the ground wireless network apparatuses 18. The transaction control platform 19 is linked with the ground wireless network apparatuses 18 for receiving and analyzing the supplies-to-buy information 211, so as to procure the supplies needed by the ship 21.

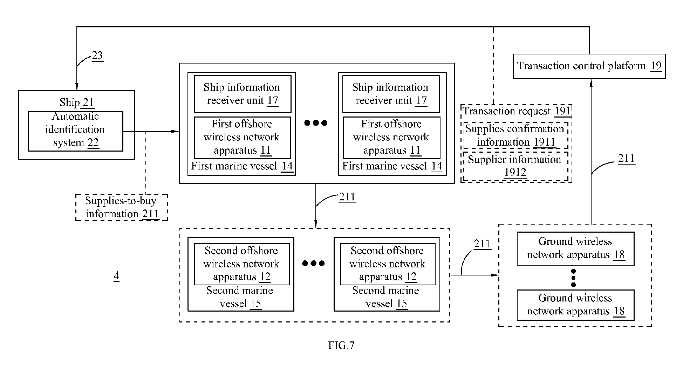

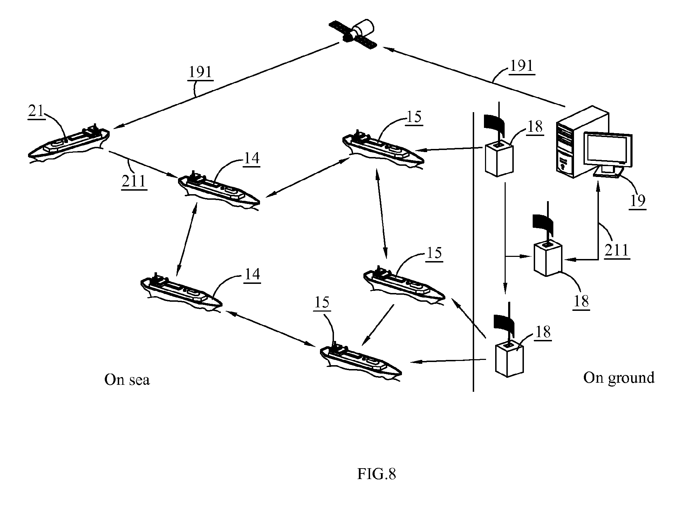

Figs. 7 and 8 are block diagram and conceptual view, respectively, of a system 4 for transaction at sea according to a fourth embodiment of the present invention. The system 4 is designed to provide transaction services to a ship 21 at sea. The system 4 is generally structurally similar to the system 3 except that it further includes a plurality of second offshore wireless network apparatuses 12, which are separately provided on different second marine vessels 15 and wirelessly linked with the first offshore wireless network apparatuses 11 for receiving the supplies-to-buy information 211. The second offshore wireless network apparatuses 12 are also wirelessly linked with at least one of a plurality of ground wireless network apparatuses 18 for transmitting the supplies-to-buy information 211 to the ground wireless network apparatuses 18, while the first offshore wireless network apparatuses 11 are not directly linked with the ground wireless network apparatuses 18.

In both the third and the fourth embodiment, the transaction control platform 19 can, depending on actual need, generate a transaction request 191, which can include supply confirmation information 1911 and supplier information 1912 that shows suppliers available for supplying the needed supplies. Then, the transaction control platform 19 sends the transaction request 191 back to the ship 21 via satellite communication 23.

With the systems 3, 4 according to the third and fourth embodiments, respectively, even if the ship 21 does not have any offshore wireless network apparatus installed thereon for communicating with a network at sea, the transaction control platform 19 can still receive the messages broadcast by the ship 21 via the ship automatic identification system 22, which is general for all ships, and analyzes the messages to know the supplies that are needed by the ship.

The marine vessels can be, for example, a ship, an offshore platform, or an offshore floating structure. The offshore wireless network apparatuses each can include a transmission unit, a receiver unit, and an antenna. The transmission unit is used to establish an upload channel for transmitting data to other offshore wireless network apparatuses or the ground wireless network apparatuses. The receiver unit is used to establish a download channel for receiving data from other offshore wireless network apparatuses or the ground wireless network apparatuses. The antenna is used to transmit and receive wireless signals. Preferably, the wireless communication protocol used by the offshore wireless network apparatuses is, but not limited to, WiFi Protocol, WiMAX Protocol, VHF Protocol or UHF Protocol.

The network at sea formed by the plurality of offshore wireless network apparatuses is preferably set up as a wireless mesh network (WiMesh), which is a mesh network supporting multipoint-to-multipoint communication and using Mobile Ad Hoc Routing Protocol, so that every offshore wireless network apparatus is both a server and a router. In this manner, it is able to overcome the problem in the server/client network that all other offshore wireless network apparatuses at the client would be unable to link with one another when an offshore wireless network apparatus acting as a server is moved to a non-linkable position.

The present invention has been described with some preferred embodiments thereof and it is understood that many changes and modifications in the described embodiments can be carried out without departing from the scope and the spirit of the invention that is intended to be limited only by the appended claims.

## Claims

1. A system for transaction at sea, comprising:
a first offshore wireless network apparatus (11) being provided on a first marine vessel (14) and transmitting supplies-to-buy information (141, 211) containing supplies needed by the first marine vessel (14);
a plurality of second offshore wireless network apparatuses (12) being separately provided on different second marine vessels (15) and wirelessly linked with the first offshore wireless network apparatus (11) for receiving the supplies-to-buy information (141, 211); the second offshore wireless network apparatuses (12) also being wirelessly linked with at least one of a plurality of ground wireless network apparatuses (18) for transmitting the supplies-to-buy information (141, 211) to the ground wireless network apparatuses (18); and
a transaction control platform (19) being linked with the ground wireless network apparatuses (18) for receiving and analyzing the supplies-to-buy information (141, 211), so as to procure the supplies needed by the first marine vessel (14).

2. The system for transaction at sea as claimed in claim 1, wherein the transaction control platform (19) further generates a transaction request (191), which includes supply confirmation information (1911) and supplier information (1912) showing suppliers available for supplying the needed supplies; and the transaction control platform (19) transmitting the transaction request (191) back to the first marine vessel (14) via the ground wireless network apparatuses (18), the second offshore wireless network apparatuses (12), and the first offshore wireless network apparatus (11).

3. A system for transaction at sea comprising:
a first offshore wireless network apparatus (11) being provided on a first marine vessel (14) and transmitting supplies-to-buy information (141, 211) containing supplies needed by the first marine vessel (14);
a plurality of second offshore wireless network apparatuses (12) being separately provided on different second marine vessels (15) and wirelessly linked with the first offshore wireless network apparatus (11) for transmitting the supplies-to-buy information (141, 211);
a plurality of third offshore wireless network apparatuses (13) being separately provided on different third marine vessels (16) and wirelessly linked with the second offshore wireless network apparatuses (12) for receiving the supplies-to-buy information (141, 211); the third offshore wireless network apparatuses (13) also being wirelessly linked with at least one of a plurality of ground wireless network apparatuses (18) for transmitting the supplies-to-buy information (141, 211) to the ground wireless network apparatuses (18); and
a transaction control platform (19) being linked with the ground wireless network apparatuses (18) for receiving and analyzing the supplies-to-buy information (141, 211), so as to procure the supplies needed by the first marine vessel (14).

4. The system for transaction at sea as claimed in claim 3, wherein the transaction control platform (19) further generates a transaction request (191), which includes supply confirmation information (1911) and supplier information (1912) showing suppliers available for supplying the needed supplies; and the transaction control platform (19) transmitting the transaction request (191) back to the first marine vessel (14) via the ground wireless network apparatuses (18), the third offshore wireless network apparatuses (13), the second offshore wireless network apparatuses (12), and the first offshore wireless network apparatus (11).

5. A system for transaction at sea, comprising:
a plurality of ship information receiver units (17) being separately provided on different first marine vessels (14) for receiving supplies-to-buy information (141, 211) transmitted from a ship (21);
a plurality of first offshore wireless network apparatus (11)es also being separately provided on the first marine vessels (14) and wirelessly linked with at least one of a plurality of ground wireless network apparatuses (18) for transmitting the supplies-to-buy information (141, 211) to the ground wireless network apparatuses (18); and
a transaction control platform (19) being linked with the ground wireless network apparatuses (18) for receiving and analyzing the supplies-to-buy information (141, 211), so as to procure the supplies needed by the ship (21).

6. The system for transaction at sea as claimed in claim 5, wherein the supplies-to-buy information (141, 211) is included in wireless signals broadcast by a ship automatic identification system (22) on the ship (21).

7. The system for transaction at sea as claimed in claim 5, wherein the transaction control platform (19) further generates a transaction request (191), which includes supply confirmation information (1911) and supplier information (1912) showing suppliers available for supplying the needed supplies; and the transaction control platform (19) transmitting the transaction request (191) back to the ship (21) via satellite communication (23).

8. A system for transaction at sea, comprising:
a plurality of ship information receiver units (17) being separately provided on different first marine vessels (14) for receiving supplies-to-buy information (141, 211) transmitted from a ship (21);
a plurality of first offshore wireless network apparatus (11)es being separately provided on the first marine vessels (14) for transmitting the supplies-to-buy information (141, 211);
a plurality of second offshore wireless network apparatuses (12) being separately provided on different second marine vessels (15) and wirelessly linked with the first offshore wireless network apparatuses (11) for receiving the supplies-to-buy information (141, 211); the second offshore wireless network apparatuses (12) also being wirelessly linked with at least one of a plurality of ground wireless network apparatuses (18) for transmitting the supplies-to-buy information (141, 211) to the ground wireless network apparatuses (18); and
a transaction control platform (19) being linked with the ground wireless network apparatuses (18) for receiving and analyzing the supplies-to-buy information (141, 211), so as to procure the supplies needed by the ship (21).

9. The system for transaction at sea as claimed in claim 8, wherein the supplies-to-buy information (141, 211) is included in wireless signals broadcast by a ship automatic identification system (22) on the ship (21).

10. The system for transaction at sea as claimed in claim 8, wherein the transaction control platform (19) further generates a transaction request (191), which includes supply confirmation information (1911) and supplier information (1912) showing suppliers available for supplying the needed supplies; and the transaction control platform (19) transmitting the transaction request (191) back to the ship (21) via satellite communication (23).
